# EUROPÄISCHE PATENTSCHRIFT

(11) **EP 1 956 455 B1**
(45) Veröffentlichungstag und Bekanntmachung des Hinweises auf die Patenterteilung: **06.04.2011**
(21) Anmeldenummer: 07102082.0
(22) Anmeldetag: 09.02.2007
(51) Int. Cl.: G05B 19/418, H04L 12/24

(54) **Verfahren zum Einbinden von Netzwerkknoten**
Method for integrating network nodes
Méthode pour intégrer des noeuds de réseau

(43) Veröffentlichungstag der Anmeldung: 13.08.2008
(73) Patentinhaber: Siemens Aktiengesellschaft, 80333 München (DE)
(72) Erfinder: Jost, Fritz, 8932 Mettmenstetten (CH); Kottmann, Daniel, 6312 Steinhausen (CH); Leuthold, Otto, 5643 Sins (CH)

(56) Entgegenhaltungen:
- EP-A- 1 107 512
- EP-A1- 1 263 167
- WO-A-03/061176
- WO-A-03/081373
- WO-A-03/098815

## Beschreibung

### Technisches Gebiet der Erfindung

Die Erfindung bezieht sich auf ein Verfahren und Einrichtungen der im Oberbegriff der Ansprüche 1 und 6 genannten Art.

Solche Verfahren eignen sich beispielsweise zur Inbetriebnahme von Netzwerken mit verteilten Regel- und Steueranwendungen in einem Gebäude. Derartige Verfahren ermöglichen eine vereinfachte Einbindung von drahtlos kommunizierenden Netzwerkknoten in ein Kommunikationsnetz einer Gebäudeautomationsanlage. Ein drahtlos kommunizierender Netzwerkknoten ist hier typischerweise ein Feldgerät, also ein Gerät mit einer Sensor- und/oder Aktorfunktion.

Eine Gebäudeautomationsanlage ist eine Anordnung zur Überwachung, Steuerung und/oder Regelung von Prozessgrössen in komplexen technischen Systemen in einem Gebäude, oder auf einem mehrere Gebäude umfassenden Areal. Eine Gebäudeautomationsanlage bedient beispielhaft Heizungs-, Lüftungs- und Klimaanlagen, Beleuchtungs- und Beschattungseinrichtungen wie auch Zutritts- , Sicherheits- und Feuerüberwachungssysteme. In der Gebäudeautomationsanlage werden Prozessgrössen - wie beispielsweise Raumklimagrössen oder Ereignisse - erfasst, ausgewertet, überwacht, beeinflusst oder generiert.

In einer Gebäudeautomationsanlage sind in der Regel eine Vielzahl so genannter Feldgeräte, wie Sensoren und Aktoren, zu bedienen. Typische Feldgeräte einer Gebäudeautomationsanlage sind beispielsweise Temperatur- und Feuchtefühler, Luftqualitätsfühler, Drucksensoren, Durchflussmesser, Elektrizitätszähler, Wärmezähler, Heizwasserventile, Thermostatventile, Lüftungsklappen, Sprinklerventile, Helligkeitsfühler, Brandmelder, Einbruchmelder, Lichtschalter, Chipkartenleser und Leser zur Erfassung biometrische Daten.

Nebst den Feldgeräten umfasst eine Gebäudeautomationsanlage in der Regel eine Vielzahl Steuer- und Regelgeräte sowie weitere Geräte, beispielsweise Geräte zur Anbindung der Gebäudeautomationsanlage an externe Kommunikationsnetze, Bildschirme oder Geräte zur Analyse von Videosignalen.

Im Weiteren wird in einer Gebäudeautomationsanlage für den Datenaustausch zwischen einzelnen Geräten oder Anlagenteilen ein elektrisches oder drahtloses Kommunikationsmedium benutzt, grundsätzlich sind Kabel, optische Datenkommunikationskanäle, Ultraschallverbindungen, elektromagnetische Nahfelder oder Funknetze oder Kombinationen davon einsetzbar, beispielsweise auch ein Glasfasernetz oder ein zellulares Telefonnetz. Für den genannten Datenaustausch einsetzbare Technologien oder Standards sind beispielsweise BACNet, LON oder LonWorks® der Firma ECHELON, der Europäische Installationsbus EIB, KONNEX, ZigBee oder der nach deutscher Norm DIN 19245 definierte PROFIBUS.

Bei der Inbetriebnahme von Netzwerken mit verteilten Regel-und/oder Steueranwendungen in einem Gebäude wird eine funktionelle Zuordnung einer Vielzahl von Netzwerkknoten vorgenommen, das heisst, Feldgeräte werden zuständigen Regel-und/oder Steuergeräten zugeordnet. Nach der funktionellen Zuordnung sind alle Feldgeräte und die ihnen zugeordnete Funktion bekannt, welche mit dem ihnen zugeordneten Regel- und/oder Steuergerät jeweils einen Regelkreis bilden. Vorteilhafterweise sind nach der Inbetriebnahme zu jedem Feldgerät aktuelle Raumkoordinaten und eine Kommunikationsadresse im Gebäudeleitsystem abgespeichert.

### Stand der Technik

Ein Verfahren zur Inbetriebnahme von Feldgeräten einer Gebäudeautomationsanlage ist beispielsweise auch aus EP 1 211 582 A bekannt.
Bekannte Verfahren zur Einbindung von drahtlos kommunizierenden Netzwerkknoten in ein Kommunikationsnetz einer Gebäudeautomationsanlage haben den Nachteil, dass sie arbeitsintensiv und damit auch zeitaufwändig sind. Ausserdem setzen bekannte Verfahren spezielle Eigenschaften bei den einzubindenden Feldgeräten voraus, wie beispielsweise ein am Feldgerät vorhandener Drucktasten-Schalter, bei dessen manueller Betätigung am Feldgerät gewisse Funktionen, beispielsweise das Aussenden eines eine Identifikation aufweisenden Telegramms und/oder eines optischen oder akustischen Signals ausgelöst werden.

Ein weiterer Nachteil bekannter Inbetriebnahmeverfahren liegt darin, dass fehlerhaft eingebundene Feldgeräte in der Regel erst indirekt durch ein Fehlverhalten der Gebäudeautomationsanlage bemerkbar sind.

Ein Verfahren der im Oberbegriff des Anspruchs 1 genannten Art ist aus der WO 03/061176 A2 bekannt. Das Verfahren bedingt ein hierarchisches Einbinden eines drahtlos kommunizierenden Sensors in ein Netzwerk einer Sensor-Gruppe, welches mehrere Sensor-Hierarchiestufen und einen Sensor-Gruppen-Koordinator (cluster head) umfasst, der seinerseits in ein übergeordnetes Netzwerk (cluster head network) eingebunden ist.

### Technische Aufgabe

Der Erfindung liegt die Aufgabe zu Grunde, ein verbessertes und allgemein einsetzbares Verfahren und Einrichtungen zur Einbindung von drahtlos kommunizierenden Netzwerkknoten in ein Kommunikationsnetz einer Gebäudeautomationsanlage anzugeben.

Die genannte Aufgabe wird erfindungsgemäss durch die Merkmale der Ansprüche 1 und 6 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

### Angaben zu den Zeichnungen

Es zeigen:
Fig. 1 Räume eines Gebäudes mit drahtlos kommunikationsfähigen Geräten einer Gebäudeautomationsanlage,
Fig. 2 ein Ablaufdiagramm zu einem Verfahren zum Einbinden der Geräte in ein Kommunikationsnetz der Gebäudeautomationsanlage, und
Fig. 3 ein Blockschaltbild eines Feldgeräts mit Sensorfunktion.

### Detaillierte Beschreibung der Erfindung

Das erfindungsgemässe Verfahren zum Einbinden von drahtlos kommunizierenden Netzwerkknoten wird mittels einer Inbetriebnahmevorrichtung durchgeführt. Die Inbebtriebnahmevorrichtung ist ein sogenanntes Engineeringtool, dem die drahtlos kommunizierende Netzwerkknoten oder Feldgeräte ihre Identifikation und vorteilhafterweise auch ihre funktionellen Eigenschaften bekanntgeben. Die funktionellen Eigenschaften eines Geräts werden beispielhaft mit einem gewissen Funktionstyp aus einer vordefinierten Menge möglicher Funktionstypen kommuniziert, wobei bei Bedarf zusätzliche Parameter, wie beispielsweise Wertebereiche oder Grössenordnungen, beigefügt werden. Die Raumkoordinaten der aktuellen Position der Inbetriebnahmevorrichtung werden von der Inbetriebnahmevorrichtung erfasst, vorteilhafterweise durch selbsttätige Messung, beispielsweise mittels verfügbarem GPS (Global Positioning System), oder durch manuelle Eingabe. Die Entfernung eines Netzwerkknotens wird beispielhaft durch Messung einer empfangenen Signalstärke und/oder einer Signallaufzeit ermittelt.

Grundsätzlich existiert ein elektronisch gespeichertes Abbild der Prozessumgebung in welchem vorgesehene Feldgeräte in Form von Knotenmodellen abgespeichert sind. Ein Knotenmodell ist beispielhaft eine Instanz eines Knotentyps, der die notwendigen Eigenschaften, also die Funktionalität des Netzwerkknotens beziehungsweise des Feldgeräts umfasst.

Das besagte Abbild der Prozessumgebung ist für die Inbetriebnahmevorrichtung verfügbar. Das Abbild der Prozessumgebung umfasst die funktionelle Zuordnung und Soll-Konfiguration aller Netzwerkknoten derart, dass alle vorgesehenen Regelkreise funktionsgerecht ausgebildet sind. Das Knotenmodell kann auch als virtueller Netzwerkknoten bezeichnet werden, dem mit dem Einbinden ein in einem Gebäuderaum real existierendes Feldgerät zugeordnet wird.

Mit Vorteil sind der Inbetriebnahmevorrichtung nicht nur die Geometrie der Gebäuderäume, sondern auch für alle in einem Gebäuderaum angeordnete Feldgeräte jeweils noch wenigstens eine ungefähre räumliche Position bekannt.

Die Inbetriebnahmevorrichtung weist eine grafische Ausgabeeinheit auf, auf der wenigstens ein Teil der Prozessumgebung darstellbar ist. Mit Vorteil ist die aktuelle Position der Inbetriebnahmevorrichtung relativ zum Layout der aktuellen Gebäudeetage auf der grafischen Ausgabeeinheit darstellbar.

Das Verfahren zum Einbinden von Netzwerknoten einer Prozessumgebung in ein Datenkommunikationsnetz mittels einer Inbetriebnahmevorrichtung, umfasst mit Vorteil wenigstens folgende Verfahrensschritte:
Verfahrensschritt 1: Visualisieren wenigstens eines Teils der Prozessumgebung auf einem Ausgabegerät der Inbetriebnahmevorrichtung;
Verfahrensschritt 2: Erfassen der aktuellen räumlichen Position der Inbetriebnahmevorrichtung;
Verfahrensschritt 3: Darstellen der Inbetriebnahmevorrichtung entsprechend deren aktuellen Position im visualisierten Teil der Prozessumgebung;
Verfahrensschritt 4: Erfassen eines Identifikationssignals eines der Prozessumgebung zugehörigen Netzwerkknotens;
Verfahrensschritt 5: Generieren eines Vorschlags für die Zuordnung des erfassten Identifikationssignals zu einem in einer Datenbank abgespeicherten Knotenmodell, aufgrund der ermittelten relativen räumlichen Position, bezogen auf die räumliche Position der Inbetriebnahmevorrichtung;
Verfahrensschritt 6: Darstellen des zur Zuordnung vorgeschlagenen Knotenmodells in der visualisierten Prozessumgebung;
Verfahrensschritt 7: Zuordnen des besagten Netzwerkknotens an das vorgeschlagene Knotenmodell durch Speichern einer im Identifikationssignal des Netzwerkknotens vorhandenen Adressinformation in einer Variablen des zur Zuordnung vorgeschlagenen Knotenmodells; und,
Verfahrensschritt 8: Darstellen des zugeordneten Netzwerkknotens in der visualisierten Prozessumgebung.

Vorteilhafterweise werden die Verfahrensschritte 4, 5, 6, 7 und 8 für jedes drahtlos kommunizierende Gerät in einem Raum wiederholt; ausserdem sind die Verfahrensschritte 2 bis 8 für jeden Raum eines Gebäudes oder Areals zu wiederholen. Mit Raum ist hier ein in der Regel mit Wänden abgegrenzter Gebäuderaum, beispielsweise ein Büroraum gemeint, in welchem jedes drahtlos kommunizierende Gerät des Raums durch die Inbetriebnahmevorrichtung drahtlos ansprechbar ist.

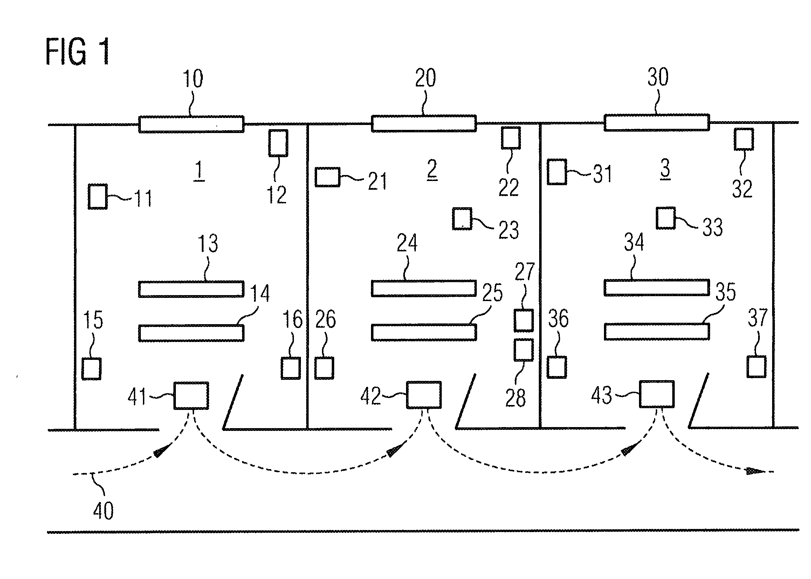

In der Fig. 1 dargestellter Teil einer Gebäudeetage weist einen ersten Raum 1, einen zweiten Raum 2 und einen dritten Raum 3 auf. Im ersten Raum 1 sind ein erstes Gerät 10, ein zweites Gerät 11, ein drittes Gerät 12, ein viertes Gerät 13, ein fünftes Gerät 14, ein sechstes Gerät 15 und ein siebtes Gerät 16 angeordnet. Der zweite Raum 2 weist ein achtes Gerät 20, ein neuntes Gerät 21, ein zehntes Gerät 22, ein elftes Gerät 23, ein zwölftes Gerät 24, ein dreizehntes Gerät 25, ein vierzehntes Gerät 26, ein fünfzehntes Gerät 27 und ein sechzehntes Gerät 28 auf. Schliesslich sind im dritten Raum 3 ein siebzehntes Gerät 30, ein achtzehntes Gerät 31, ein neunzehntes Gerät 32, ein zwanzigstes Gerät 33, ein einundzwanzigstes Gerät 34, ein zweiundzwanzigstes Gerät 35, ein dreiundzwanzigstes Gerät 36 und ein vierundzwanzigstes Gerät 37 angeordnet.

Die in der Fig. 1 dargestellten Geräte 10 bis 37 sind entweder Feldgeräte oder Steuer- und/oder Regelgeräte. Die Geräte 10 bis 37 sind drahtlos kommunikationsfähig, wobei eine drahtlose Kommunikation zwischen den Geräten 10 bis 37 vorteilhafterweise gemäss einem Standard erfolgt. Im vorgeschlagenen Verfahren werden die Geräte 10 bis 37 als Netzwerkknoten in ein Gebäudeautomationssystem eingebunden.

In einer vorteilhaften Variante des Gebäudeautomationssystem sind drahtlos kommunikationsfähige Steuer- und/oder Regelgeräte zusätzlich drahtgebunden an ein weiteres Kommunikationsnetz angeschlossen.

Mit 40 ist ein beispielhafter Weg bezeichnet, dem ein mit der Inbetriebnahme betraute Person mit einer mobilen Inbetriebnahmevorrichtung abschreitet, während dem das vorgeschlagene Verfahren zum Einbinden von Netzwerkknoten durchgeführt wird. Beim Einbinden von Netzwerkknoten des ersten Raums 1 verweilt die Inbetriebnahmevorrichtung an einer ersten Position 41, beim Einbinden von Netzwerkknoten des zweiten Raums 2 an einer zweiten Position 42 und beim Einbinden von Netzwerkknoten des dritten Raums 3 an einer dritten Position 43.

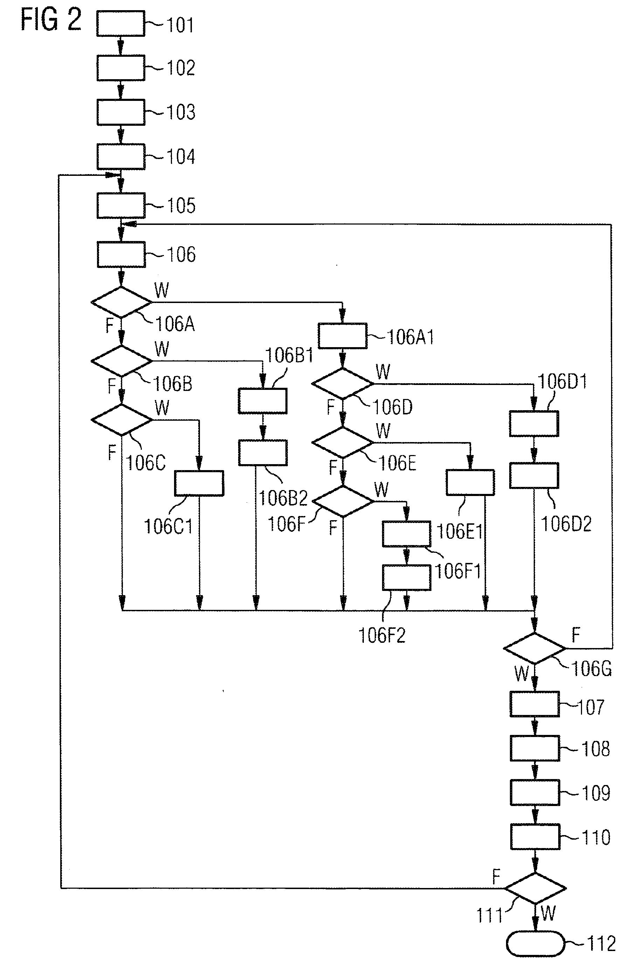

In Fig. 2 ist mit 101 ein erster Schritt im Ablaufdiagramm bezeichnet. Der erste Schritt 101 umfasst die Wahl aller Geräte 10 bis 37 (Fig. 1) und ihre Zuordnung an einen Raum 1, 2 oder 3 aufgrund vorgesehener Applikationen innerhalb der Gebäudeautomation. Eine Applikation umfasst beispielsweise die Klimaregelung eines Raumes, oder die Brandüberwachung einer Gebäudezone, oder eine Zutrittskontrolle. Ein zweiter Schritt 102 umfasst die Planung der Installation aller Geräte für jeden Raum 1, 2 und 3. Nach dem zweiten Schritt 102 sind für jedes Gerät mindestens die ungefähren Raumkoordinaten bekannt, an denen es zu montieren ist.

Ein dritter Schritt 103 umfasst die Aufbereitung der in der Inbetriebnahmevorrichtung verfügbaren Information zu jedem Raum 1, 2 und 3. Die besagte Information umfasst vorteilhafterweise die Raumgeometrie und auch Zusatzinformation zu den montierten Geräten. Die Zusatzinformation eines Geräts umfasst mit Vorteil eine eindeutige Adresse, einen Gerätetyp, eine zugeordnete Applikation, eine Verknüpfungsinformation und insbesondere bei hoher Gerätedichte auch eine Montageposition, beispielsweise in Form von Raumkoordinaten. Die Verknüpfungsinformation gibt vorteilhafterweise an, mit welchen weiteren Geräten das Gerät wie zu verknüpfen ist. Ist das Gerät beispielsweise ein Temperaturfühler, gibt die Verknüpfungsinformation beispielsweise an, dass ein bestimmter Ausgang des Geräts mit einem Eingang eines gewissen Regelgeräts zu verknüpfen ist.

In einem vierten Schritt 104 werden die Geräte am vorgesehenen Platz im Gebäuderaum montiert. Die ersten vier Schritte 101 bis 104 gehören zur Planungs- und Montage-Phase und sind eine wichtige Voraussetzung für den eigentlichen Ablauf des Verfahrens zum Einbinden von drahtlos kommunizierenden Netzwerkknoten.

In einem fünften Schritt 105 wird die aktuelle Position 41, 42 oder 43 (Fig. 1) der Inbetriebnahmevorrichtung durch die Inbetriebnahmevorrichtung erfasst.

In einem sechsten Schritt 106 werden die Geräte des aktuellen Raums 1, 2 oder 3 durch die Inbetriebnahmevorrichtung aufgefordert, sich mit ihren Kenndaten zu melden. Die Kenndaten eines Geräts sind durch eine Empfängereinrichtung der Inbetriebnahmevorrichtung erfassbar und umfassen vorteilhafterweise eine einmalige Gerätenummer, einen Gerätetyp und eine für das Gerät vorgesehene Applikation. Mit Vorteil werden die noch nicht eingebundenen Geräte des aktuellen Raums mit einer sogenannten Broadcast Meldung angesprochen.

In einer ersten Entscheidung 106A wird beispielhaft der Boolsche Ausdruck "genau alle Geräte des aktuellen Raumes haben sich gemeldet" ausgewertet. Sofern das Resultat wahr ist, wird mit einem siebten Schritt 106A1, andernfalls mit einer zweiten Entscheidung 106B weitergefahren.

Im siebten Schritt 106A1 wird jeweils die Position aller Geräte, die sich gemeldet haben ermittelt und mit der entsprechenden aus den Planungsdaten bekannten Position verglichen. Das Resultat dieser Positionsvergleiche bestimmt den weiteren Ablauf gemäss einer dritten Entscheidung 106D, einer vierten Entscheidung 106E, einer fünften Entscheidung 106F und einer sechsten Entscheidung 106G.

In der dritten Entscheidung 106D wird beispielhaft der Boolsche Ausdruck "nicht alle Geräte haben die geplante Position" ausgewertet. Sofern das Resultat wahr ist, wird mit einem achten Schritt 106D1 und einem neunten Schritt 106D2, andernfalls mit der vierten Entscheidung 106E weitergefahren.

Im sechsten Schritt 8 ist eine manuelle Kontrolle der Position des fraglichen Geräts oder der fraglichen Geräte durch Fachpersonal erforderlich.

Im siebten Schritt 9 wird die Position betroffener Geräte entsprechend richtig gestellt, je nach Bedarf durch Ummontieren oder durch eine manuelle Korrektur via Benutzerschnittstelle an der Inbetriebnahmevorrichtung.

In der vierten Entscheidung 106E wird beispielhaft der Boolsche Ausdruck "nicht alle Geräte sind innerhalb des aktuellen Raumes" ausgewertet. Sofern das Resultat wahr ist, wird mit einem zehnten Schritt 106E1, andernfalls mit der fünften Entscheidung 106F weitergefahren. Die vierte Entscheidung 106E wird beispielsweise dann wahr, wenn sich das im zweiten Raum 2 (Fig. 1) angeordnete vierzehnte Gerät 26 meldet, wenn die Inbetriebnahmevorrichtung sich im ersten Raum 1 an der ersten Position 41 befindet.

Im zehnten Schritt 106E1 erfolgt eine manuelle Kontrolle oder Korrektur.

In der fünften Entscheidung 106F wird beispielhaft der Boolsche Ausdruck "mindestens zwei Geräte haben dieselbe Position" ausgewertet. Sofern das Resultat wahr ist, wird mit einem elften Schritt 106F1 und einem zwölften Schritt 106F2, andernfalls mit der sechsten Entscheidung 106G weitergefahren. Die fünfte Entscheidung 106F wird beispielsweise dann wahr, wenn das vierte Gerät 13 derart nahe am gleichartigen fünften Gerät 14 montiert ist, dass ihre von der Inbetriebnahmevorrichtung erfassten Positionen von der Inbetriebnahmevorrichtung nicht eindeutig unterscheidbar sind.

Im elften Schritt 106F1 werden die betroffenen Geräte durch die Inbetriebnahmevorrichtung selbsttätig und nacheinander aufgefordert, sich beispielsweise optisch oder akustisch bemerkbar zu machen. Beispielhaft ist ein Gerät dazu mit einer Leuchtdiode bestückt, durch die sich das Gerät nach einem entsprechenden Aufforderungsbefehl optisch bemerkbar macht.

Im zwölften Schritt 107F2 wird den betroffenen Geräten die geplante Position zugeordnet.

In der zweiten Entscheidung 106B wird beispielhaft der Boolsche Ausdruck "mehr Geräte, als für den aktuellen Raum geplant sind, haben sich gemeldet" ausgewertet. Sofern das Resultat wahr ist, wird mit einem dreizehnten Schritt 106B1 und einem vierzehnten Schritt 106B2, andernfalls mit einer siebten Entscheidung 106C weitergefahren. Die zweite Entscheidung 106B wird beispielsweise dann wahr, wenn im aktuellen Raum tatsächlich zu viele Geräte montiert worden sind, oder wenn sich ein in einem Nebenraum montiertes Gerät meldet.

Im dreizehnten Schritt 106B1 werden die Positionen aller gemeldeten Geräte durch die Inbetriebnahmevorrichtung erfasst und mit den entsprechenden geplanten Positionen verglichen. Im vierzehnten Schritt 106B2 wird die Installation visuell überprüft und bei Bedarf manuell korrigiert.

In der siebten Entscheidung 106C wird beispielhaft der Boolsche Ausdruck "nicht alle Geräte, die für den aktuellen Raum geplant sind, haben sich gemeldet" ausgewertet. Sofern das Resultat wahr ist, wird mit einem fünfzehnten Schritt 106C1, andernfalls mit der sechsten Entscheidung 106G weitergefahren. Die siebte Entscheidung 106C ist beispielsweise dann wahr, wenn zu wenig Geräte oder defekte Geräte montiert sind.

Im fünfzehnten Schritt 106C1 wird die Installation manuell vervollständigt, indem beispielsweise ein erforderliches Gerät nachträglich montiert wird.

In der sechsten Entscheidung 106G wird beispielhaft der Boolsche Ausdruck "alle Geräte sind an der geplanten Position" ausgewertet. Sofern das Resultat falsch ist, wird im Ablauf vor den sechsten Schritt 106 zurückgesprungen und das Verfahren ab dem sechsten Schritt 106 wiederholt, andernfalls wird mit einem sechzehnten Schritt 107, einem siebzehnten Schritt 108, einem achtzehnten Schritt 109, einem neunzehnten Schritt 110 und schliesslich einer achten Entscheidung 111 weitergefahren.

Im sechzehnten Schritt 107 werden allen Geräten die entsprechende, von der Inbetriebnahmevorrichtung ermittelte Position und eine aktuelle Raumbezeichnung übermittelt.

Im siebzehnten Schritt 108 werden alle Verknüpfungsfunktionen ausgeführt. Ist das zweite Gerät 11 beispielsweise ein Raumtemperaturfühler und das sechste Gerät 15 ein Regelgerät mit Temperaturanzeige, und sind die beiden Geräte 11 und 15 einer gemeinsamen Applikation zugeordnet, wird ein Ausgang des zweiten Geräts 11 mit einem entsprechenden Eingang des sechsten Geräts 15 verknüpft. Und ist beispielsweise das zwölfte Gerät 24 ein Leuchtkörper und das fünfzehnte Gerät 27 ein Lichtschalter, mit dem der Leuchtkörper 24 zu schalten ist, wird ein Ausgang des fünfzehnten Geräts 27 mit einem Eingang des zwölften Geräts 24 verknüpft.

Im achtzehnten Schritt 109 wird durch die Inbetriebnahmevorrichtung allen eingebundenen Geräten mitgeteilt, dass sie als Netzwerkknoten in das drahtlose Kommunikationsnetz der Gebäudeautomationsanlage eingebunden sind.

Im neunzehnten Schritt 110 wird vorteilhafterweise eine Kontrolle der Raumfunktion durchgeführt. Wurde beispielsweise, wie im siebzehnten Schritt 108 beispielhaft erwähnt, der Raumtemperaturfühler 11 mit dem Regelgerät 15 verknüpft, kann in der entsprechenden Kontrolle der Raumfunktion die vom Raumtemperaurfühler 11 gemessene aktuelle Raumtemperatur an der Temperaturanzeige des Regelgeräts 15 abgelesen werden. Gemäss obigen Verknüpfungsbeispielen wird bei der Kontrolle der Raumfunktion auch die Wirkung des Schalters 27 auf den Leuchtkörper 24 überprüft.

In der achten Entscheidung 111 wird beispielhaft der Boolsche Ausdruck "in allen Räumen sind die Geräte eingebunden" ausgewertet. Sofern das Resultat falsch ist, wird im Ablauf vor den fünften Schritt 105 zurückgesprungen und das Verfahren ab dem fünften Schritt 105 für einen weiteren Raum wiederholt, andernfalls wird ein Ende 112 des Ablaufs erreicht.

Es versteht sich von selbst, dass der in Fig. 2 dargestellte prinzipielle Ablauf durch äquivalente Diagrammvarianten darstellbar ist, in denen beispielsweise die im Zusammenhang mit Fig. 2 formulierten Boolschen Ausdrücke mindestens zum Teil invers oder in anderer Reihenfolge formuliert sind. Diese äquivalenten Darstellungen würden aber schliesslich zum gleichen Endresultat führen, nämlich dazu, dass alle Geräte eingebunden sind.

In der Regel weisen drahtlos kommunizierende Feldgeräte eine eigene elektrische Energieversorgung auf, beispielsweise eine im Feldgerät angeordnete Batterie. Damit ein häufiger Batteriewechsel erspart werden kann, ist bei derartigen Feldgeräten besonders auf eine energiesparende Betriebsart zu achten. Bei Feldgeräten, die lediglich eine Sensorfunktion ausüben, kann nun die Tatsache ausgenutzt werden, dass das Feldgerät im Normalbetrieb eigentlich nur in gewissen Zeitabständen Messwerte, beispielsweise über einen eigenen Funksender zu liefern hat, eine Empfangsfunktion jedoch im Normalbetrieb nicht notwendig ist.

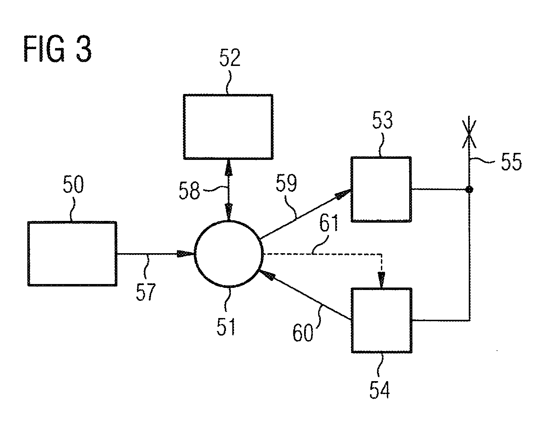

Wie oben ausgeführt, wird im achtzehnten Schritt 109 durch die Inbetriebnahmevorrichtung allen eingebundenen Geräten mitgeteilt, dass sie als Netzwerkknoten in das drahtlose Kommunikationsnetz der Gebäudeautomationsanlage eingebunden sind. Damit ergibt sich für das eingebundene Feldgerät, das lediglich eine Sensorfunktion auszuüben hat die energiesparende Möglichkeit, dass ein vorhandener Funkempfänger nach dem Einbinden eigentlich abgeschaltet werden könnte, wenn dies der Aufbau des Feldgeräts zulässt. In der Fig. 3 ist der prinzipielle Aufbau eines Feldgeräts mit Sensorfunktion dargestellt. Der vorteilhafte Aufbau des Feldgeräts ermöglicht das Abschalten des Funkempfängers, nachdem das Feldgerät im vorgeschlagenen Verfahren in das drahtlose Kommunikationsnetz eingebunden ist.

Das vorteilhafte Feldgerät mit Sensorfunktion weist einen Sensor 50, einen programmierten Prozessor 51, einen Informationsspeicher 52, einen Sender 53, einen Empfänger 54 und eine Antenne 55 auf. Ein vom Sensor erfasstes Sensorsignal 57 wird beispielsweise periodisch oder nach einer gewissen Wertänderung vom Prozessor 51 in einem ausgehenden Telegramm 59 an den Sender 53 zum Aussenden übergeben. Die Beim Einbinden des Feldgeräts in das Kommunikationsnetz von der Inbetriebnahmevorrichtung an den Empfänger 54 des Feldgeräts übermittelte Information wird beispielhaft im Informationsspeicher 52 abgelegt. Nach dem achtzehnten Schritt 109 wird der Empfänger 54 beispielhaft vom Prozessor 51 über ein Steuersignal 61 abgeschaltet, wodurch der Energieverbrauch des Feldgeräts massgeblich vermindert wird. In einer Variante des vorteilhaften Feldgeräts, wird jeweils nach dem Aussenden eines ausgehenden Telegramms 59 der Empfänger 54 über das Steuersignal 61 für die Dauer eines relativ kurzen Zeitfensters eingeschaltet. Die Dauer des Zeitfensters ist so bemessen und auf den eingesetzten Standard ausgerichtet, dass der Empfänger 54 im Zeitfenster ein eingehendes Telegramm 60 empfangen könnte. Genau in diesem Zeitfenster ist das Feldgerät also bei Bedarf über den Empfänger 54 ansprechbar.

## Patentansprüche

1. Verfahren zum Einbinden von drahtlos kommunizierenden Netzwerkknoten (10; 11; 12; 13; 14; 15; 16) einer Prozessumgebung in ein Datenkommunikationsnetz mittels einer Inbetriebnahmevorrichtung, beinhaltend die folgenden Verfahrensschritte:
- visualisieren wenigstens eines Teils der Prozessumgebung auf einer Ausgabeeinheit der Inbetriebnahmevorrichtung;
- erfassen der aktuellen räumlichen Position (41; 42; 43) der Inbetriebnahmevorrichtung;
- darstellen der Inbetriebnahmevorrichtung entsprechend deren aktuellen Position (41; 42; 43) im visualisierten Teil der Prozessumgebung;
- erfassen (106) eines Identifikationssignals eines der Prozessumgebung zugehörigen Netzwerkknotens (10; 11; 12; 13; 14; 15; 16);
- generieren eines Vorschlags für eine Zuordnung des erfassten Identifikationssignals zu einem in einer Datenbank abgespeicherten, funktionelle Eigenschaften des Netzwerkknotens (10; 11; 12; 13; 14; 15; 16) umfassenden Knotenmodell, aufgrund der ermittelten relativen räumlichen Position der Netzwerkknoten, bezogen auf die räumliche Position (41; 42; 43) der Inbetriebnahmevorrichtung;
- darstellen des zur Zuordnung vorgeschlagenen Knotenmodells in der visualisierten Prozessumgebung;
- zuordnen (108) des besagten Netzwerkknotens (10; 11; 12; 13; 14; 15; 16) an das vorgeschlagene Knotenmodell durch Speichern einer im Identifikationssignal des Netzwerkknotens (10; 11; 12; 13; 14; 15; 16) vorhandenen Adressinformation in einer Variablen des zur Zuordnung vorgeschlagenen Knotenmodells; und
- darstellen des zugeordneten Netzwerkknotens (10; 11; 12; 13; 14; 15; 16) in der visualisierten Prozessumgebung.

2. Verfahren nach Anspruch 1, **dadurch gekennzeichnet,**
**dass** zum Generieren des Vorschlags für die Zuordnung Pegel und/oder Laufzeiten von Funksignalen ausgewertet werden.

3. Verfahren nach einem vorangehenden Anspruch, **dadurch gekennzeichnet,**
**dass** zum Generieren des Vorschlags für die Zuordnung die Triangulationsmethode eingesetzt wird.

4. Verfahren nach einem vorangehenden Anspruch, **dadurch gekennzeichnet,**
**dass** eine Unsicherheit einer ermittelten Position eines identifizierten Netzwerkknotens (10; 11; 12; 13; 14; 15; 16) auf der Ausgabeeinheit der Inbetriebnahmevorrichtung optisch dargestellt wird.

5. Verfahren nach einem vorangehenden Anspruch, **dadurch gekennzeichnet,**
**dass** mit dem Einbinden (108, 109) eines eine Sensorfunktion ausübenden Netzwerkknotens (10; 11; 12; 13; 14; 15; 16) ein Funkempfänger (54) des Netzwerkknotens (10; 11; 12; 13; 14; 15; 16) selbsttätig abgeschaltet wird.

6. Inbetriebnahmevorrichtung mit einer graphischen Benutzerschnittstelle, einer Einrichtung zur drahtlosen Kommunikation und Mitteln zum Zugriff auf ein Modell einer Prozessumgebung, zur Durchführung eines Verfahrens nach einem der Ansprüche 1 bis 5, beinhaltend ein GPS-Modul, durch welches eine aktuellen Position (41; 42; 43) der Inbetriebnahmevorrichtung messbar ist, und eine Ausgabeeinheit, auf der die aktuelle Position (41; 42; 43) der Inbetriebnahmevorrichtung in einer Prozessumgebung darstellbar ist.

## Claims

1. Method for integrating wirelessly communicating network nodes (10; 11; 12; 13; 14; 15; 16) of a process environment into a data communications network by means of a commissioning device, the method including the following method steps:
- visualising at least a part of the process environment on an output unit of the commissioning device;
- detecting the current spatial position (41; 42; 43) of the commissioning device;
- representing the commissioning device according to its current position (41; 42; 43) in the visualised part of the process environment;
- detecting (106) an identification signal of a network node (10; 11; 12; 13; 14; 15; 16) associated with the process environment;
- generating a proposal for an assignment of the detected identification signal to a node model stored in a database and comprising functional characteristics of the network node (10; 11; 12; 13; 14; 15; 16) based on the determined relative spatial position of the network nodes, referred to the spatial position (41; 42; 43) of the commissioning device;
- representing the node model proposed for the assignment in the visualised process environment;
- assigning (108) the said network node (10; 11; 12; 13; 14; 15; 16) to the proposed node model by storing address information present in the identification signal of the network node (10; 11; 12; 13; 14; 15; 16) in a variable of the node model proposed for the assignment; and
- representing the assigned network node (10; 11; 12; 13; 14; 15; 16) in the visualised process environment.

2. Method according to claim 1, **characterised in that**
levels and/or propagation times of radio signals are analysed for the purpose of generating the proposal for the assignment.

3. Method according to a preceding claim, **characterised in that**
the triangulation method is used for generating the proposal for the assignment.

4. Method according to a preceding claim, **characterised in that**
an uncertainty of a determined position of an identified network node (10; 11; 12; 13; 14; 15; 16) is visually represented on the output unit of the commissioning device.

5. Method according to a preceding claim, **characterised in that**
with the integration (108, 109) of a network node (10; 11; 12; 13; 14; 15; 16) exercising a sensor function, a radio receiver (54) of the network node (10; 11; 12; 13; 14; 15; 16) is switched off automatically.

6. Commissioning device having a graphical user interface, a device for wireless communication and means for accessing a model of a process environment, for performing a method according to one of claims 1 to 5, the device including a GPS module by means of which a current position (41; 42; 43) of the commissioning device can be measured, and an output unit on which the current position (41; 42; 43) of the commissioning device in a process environment can be visualised.

## Revendications

1. Procédé pour intégrer des noeuds ( 10 ; 11 ; 12 ; 13 ; 14 ; 15 ; 16 ) de réseau communiquant sans fil à un environnement de processus dans un réseau de communication de données, au moyen d'un dispositif de mise en service, comprenant les stades de processus suivantes :
- on visualise au moins une partie de l'environnement de processus sur une unité d'émission du dispositif de mise en service ;
- on détecte la position ( 41 ; 42 ; 43 ) instantanée dans l'espace du dispositif de mise en service ;
- on représente le dispositif de mise en service conformément à sa position ( 41 ; 42 ; 43 ) instantanée dans la partie visualisée de l'environnement de processus ;
- on détecte ( 106 ) un signal d'identification d'un noeud ( 10 ; 11 ; 12 ; 13 ; 14 ; 15 ; 16 ) de réseau appartenant à l'environnement de processus ;
- on produit une proposition d'une affectation du signal d'identification détecté à une propriété fonctionnelle, mémorisée dans une base de données, du modèle de noeud comprenant des noeuds ( 10 ; 11 ; 12 ; 13 ; 14 ; 15 ; 16 ) de réseau, sur la base de la position relative dans l'espace et déterminée des noeuds de réseau, rapportée à la position ( 41 ; 42 ; 43 ) dans l'espace du dispositif de mise en service ;
- on représente le modèle de noeud proposé pour l'affectation dans l'environnement de processus visualisé ;
- on associe ( 108 ) ledit noeud ( 10 ; 11 ; 12 ; 13 ; 14 ; 15 ; 16 ) de réseau au modèle de noeud proposé en mémorisant une information d'adresse présente dans le signal d'identification du noeud ( 10 ; 11 ; 12 ; 13 ; 14 ; 15 ; 16 ) de réseau dans une variable du modèle de noeud proposé pour l'affectation ; et
- on représente le noeud ( 10 ; 11 ; 12 ; 13 ; 14 ; 15 ; 16 ) de réseau affecté dans l'environnement de processus visualisé.

2. Procédé suivant la revendication 1, **caractérisé en ce que**, pour produire la proposition pour l'affectation, on exploite des niveaux et/ou des temps de parcours de signaux radio.

3. Procédé suivant l'une des revendications précédentes, **caractérisé en ce que**, pour produire la proposition pour l'affectation, on utilise la méthode de triangulation.

4. Procédé suivant l'une des revendications précédentes, **caractérisé en ce qu'**on représente visuellement une incertitude d'une position déterminée d'un noeud ( 10 ; 11 ; 12 ; 13 ; 14 ; 15 ; 16 ) de réseau identifié sur l'unité d'émission du dispositif de mise en service.

5. Procédé suivant l'une des revendications précédentes, **caractérisé en ce que**, par l'intégration ( 108, 109 ) d'un noeud ( 10 ; 11 ; 12 ; 13 ; 14 ; 15 ; 16 ) de réseau exerçant une fonction de capteur, on arrête automatiquement un récepteur ( 54 ) radio du noeud ( 10 ; 11 ; 12 ; 13 ; 14 ; 15 ; 16 ) de réseau.

6. Dispositif de mise en service comprenant une interface utilisateur graphique, un dispositif de communication sans fil et des moyens d'accès à un modèle d'un environnement de processus pour la mise en oeuvre d'un procédé suivant l'une des revendications 1 à 5, comprenant un module GPS, par lequel on peut mesurer une position ( 41 ; 42 ; 43 ) instantanée du dispositif de mise en service et une unité d'émission, sur laquelle la position ( 41 ; 42 ; 43 ) instantanée du dispositif de mise en service peut être représentée dans un environnement de processus.
